(19) Europäisches Patentamt
European Patent Office
Office européen des brevets

(11) EP 2 205 646 B1

# (12) EUROPEAN PATENT SPECIFICATION

(45) Date of publication and mention of the grant of the patent:
**13.04.2011 Bulletin 2011/15**

(21) Application number: **08841433.9**

(22) Date of filing: **21.10.2008**

(51) Int Cl.:
***C08F 6/22*** *(2006.01)* ***B29B 13/06*** *(2006.01)*
***C08J 3/16*** *(2006.01)*

(86) International application number:
**PCT/EP2008/064185**

(87) International publication number:
**WO 2009/053350 (30.04.2009 Gazette 2009/18)**

## (54) PROCESS FOR PREPARING FINE DRIED POWDERS OF MELT-PROCESSABLE OR NON-MELT-PROCESSABLE TFE (CO)POLYMERS

VERFAHREN ZUR HERSTELLUNG GETROCKNETER FEINPULVER AUS SCHMELZVERARBEITBAREN ODER NICHT-SCHMELZVERARBEITBAREN TFE-(CO) POLYMEREN

PROCÉDÉ DE PRÉPARATION DE FINES POUDRES SÉCHÉES DE (CO)POLYMÈRES DE TFE TRANSFORMABLES À L'ÉTAT FONDU OU NON TRANSFORMABLES À L'ÉTAT FONDU

(84) Designated Contracting States:
**AT BE BG CH CY CZ DE DK EE ES FI FR GB GR HR HU IE IS IT LI LT LU LV MC MT NL NO PL PT RO SE SI SK TR**

(30) Priority: **22.10.2007 EP 07425663**
**04.01.2008 IT MI20080009**

(43) Date of publication of application:
**14.07.2010 Bulletin 2010/28**

(73) Proprietor: **Solvay Solexis S.p.A.**
**20021 Bollate (MI) (IT)**

(72) Inventors:
- **LIGABUE, Omar**
  **I-15100 Spinetta Marengo (IT)**
- **DEREGIBUS, Evasio**
  **I-15067 Novi Ligure (IT)**
- **KAPELIOUCHKO, Valeri**
  **I-15100 Alessandria (IT)**

(74) Representative: **Benvenuti, Federica et al**
**Solvay S.A.**
**Département de la Propriété Intellectuelle**
**Rue de Ransbeek, 310**
**1120 Bruxelles (BE)**

(56) References cited:
**US-A- 5 391 709 US-A1- 2003 088 055**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 2 205 646 B1

## Description

The present invention relates to a process for drying coagulated fine powders of polytetrafluoroethylene (PTFE) homopolymer and of TFE copolymers, melt-processable or non- melt-processable, with high productivity and low loss of polymer.

More particularly, the present invention relates to a drying process that uses metal belts for drying.

It is known that manufactured articles of PTFE homopolymer and of TFE copolymers, melt-processable or non-melt-processable, may have various shapes, for example tubes, cables or belts. These shapes may be obtained by subjecting fine coagulated powders of above mentioned polymers in dried form to a lubricated extrusion process.

It is known practice to dry fine wet powders of PTFE homopolymer and of TFE copolymers, melt-processable or non- melt-processable on metal trays (weaves) using a batch process (static oven). When the production grades are changed, the trays need be subjected to washing to remove the fine powders of polymer that have adhered to the metal walls of the trays. This involves a substantial reduction in productivity (amount of powder produced/unit of time). In addition, there are appreciable losses of polymer since the adhered polymer cannot be reused as fine powder. In this drying process, the handling of the powder is normally performed by an operator. This causes damages, for example crushing or lamination of the powders, which lead to defects in the manufactured products obtained. In addition, static oven processes have a temperature gradient inside the oven. This leads to the production of powders with non-uniform properties.

Another process for drying and purifying PTFE powders is also known, which involves the hot-air treatment of a layer of wet powders deposited on a paperboard. See US 5 391 709. This process has productivity and cost problems since the board cannot be used for several cycles on account of problems of contamination of the successive batches. Furthermore, the board cannot be used at elevated temperatures.

Patent US 5 391 709 describes the purification of fine coagulated powders of PTFE homopolymer and of TFE copolymers, melt-processable or non- melt-processable, from volatile contaminants such as water, surfactants and polymerization initiators by using drying ovens of "through-air drier" type in which the fine coagulated polymer powders are placed in contact with the surface of a belt of a polymer fabric. The drying temperature is between 110°C and 200°C. Tests performed by the Applicant (see the comparative examples) showed that the use of polymer fabrics described in the said patent, for example Nomex® and PEEK, involves substantial weight losses of polymer. The reason for this is that adhesion of the fine PTFE powders to the polymer belt has been observed. This leads to losses of very valuable product. In addition, the maintenance of polymer fabric belts is complex. For example, in the case of tears or breaks, the polymer fabrics are difficult to repair. In the said patent, it is stated that PTFE is known for its non-stick properties. However, in the form of a coagulate and of fine powders obtained from the coagulate, PTFE is notoriously sticky. It is thought that this is due to the fibrillar nature of PTFE.

There was thus felt to be a need for a process for producing fine coagulated dried powders of PTFE homopolymer and of TFE copolymers, melt-processable or non- melt-processable, that have the following combination of properties:

- high productivity,
- ability to produce powders with improved uniformity of properties and high purity,
- absence of handling by the operator,
- low loss of PTFE powders as by-product,
- possibility of working within a wide temperature range, preferably between 110°C and 250°C,
- ability also to work continuously.

One object of the present invention is a process for preparing, in dried form, fine coagulated powders of PTFE homopolymer or of melt-processable or non-melt-processable TFE copolymers, comprising:

I) application of fine wet coagulated powders of the polymer in the form of a bed onto the surface of a metal belt, drying of the fine wet powders of the polymer by passing a stream of air through the bed in the direction from the top of the bed to the bottom of the bed;
the metal belt having a mesh size that allows passage of the air and that substantially prevents passage of the fine polymer powder;
II) cooling of the dried fine powder;
III) removal of the powder from the surface of the metal belt.

The term "TFE copolymer" means herein a polymer of TFE with one or more comonomers containing at least one unsaturation of ethylenic type, in an amount of from 0.01% to 15% by weight and preferably up to 10% by weight. These copolymers may be melt-processable or non-melt-processable. Preferably, the amount of comonomers is lower than 3% by weight and more preferably between 0.01 % and 1% by weight, to give non-melt-processable TFE polymers.

The comonomers that may be used are either of the hydrogenated or fluorinated type, preferably fluorinated and more preferably perfluorinated. Among the hydrogenated comonomers that may be mentioned are ethylene, propylene, acrylic monomers, for example methyl methacrylate, (meth)acrylic acid, butyl acrylate and hydroxyethyl acrylate, and styrene monomers, for instance styrene.

Among the fluorinated comonomers that may be mentioned are:

- $C_3$-$C_8$ perfluoroolefins, such as hexafluoropropene (HFP);
- $C_2$-$C_8$ hydrogenated fluoroolefins, such as vinyl fluoride (VF), vinylidene fluoride (VDF), trifluoroethylene, hexafluoroisobutene and perfluoroalkylethylene $CH_2$=CH-$R_f$, in which $R_f$ is a $C_1$-$C_6$ perfluoroalkyl;
- $C_2$ -$C_8$chloro- and/or bromo- and/or iodo-fluoroolefins, such as chlorotrifluoroethylene (CTFE);
- (per)fluoroalkyl vinyl ethers (PAVE) $CF_2$=$CFOR_f$, in which $R_f$ is a $C_1$-$C_6$ (per)fluoroalkyl, for example $CF_3$, $C_2F_5$ or $C_3F_7$;
- (per)fluoro-oxyalkyl vinyl ethers $CF_2$=CFOX, in which X is: a $C_1$-$C_{12}$ alkyl, or a $C_1$-$C_{12}$ oxyalkyl, or a $C_1$-$C_{12}$ (per) fluoro-oxyalkyl containing one or more ether groups, for example perfluoro-2-propoxypropyl;
- fluorodioxoles, preferably perfluorodioxoles of formula

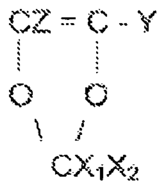

(I)

  in which Y is equal to $OR_f$, where $R_f$ is a perfluoroalkyl containing from 1 to 5 carbon atoms, or Y = Z as defined below; preferably, Y is equal to $OR_f$; $X_1$ and $X_2$, which may be identical or different, are -F or -$CF_3$; Z is chosen from -F, -H, -Cl; preferably, in formula (I), $X_1$, $X_2$ and Z are -F; $R_f$ is preferably -$CF_3$, -$C_2F_5$ or -$C_3F_7$;
- fluorovinyl ethers (MOVE) of general formula $CFX_{AI}$ =$CX_{AI}$ $OCF_2OR_{AI}$ (A-I) in which $R_{AI}$ is a $C_1$-$C_6$ linear or branched or a $C_5$-$C_6$ cyclic (per)fluoroalkyl group, or a linear or branched $C_2$-$C_6$ (per)fluorooxyalkyl group containing from one to three oxygen atoms; when $R_{AI}$ is fluoroalkyl or fluorooxyalkyl as defined above, it may contain from 1 to 2 atoms, which may be identical or different, chosen from the following: H, Cl, Br, I; $X_{AI}$ = F, H; the preferred compounds are those of general formula: $CFX_{AI}$ =$CX_{AI}$ $OCF_2$ $OCF_2$ $CF_2$ $Y_{AI}$ (A-II) in which $Y_{AI}$ = F, $OCF_3$; $X_{AI}$ is as defined above; in particular
  (MOVE I) $CF_{2=}CFOCF_2OCF_2CF_3$ (A-III),
  (MOVE II) $CF_2$=$CFOCF_2OCF_2CF_2OCF_3$ (A-IV), and
  (MOVE III) $CF_2$=$CFOCF_2$ $OCF_3$.

Among the TFE copolymers, non-melt-processable copolymers are preferred.

The fine coagulated powders of the polymer to be dried may be obtainable, for example, by coagulating PTFE latexes by means of the addition of electrolytes. Preferred examples of electrolytes are $HNO_3$, $Al_2(SO_4)_3$ and $(NH_4)_2CO_3$. See, for example, US 6 790 932. Alternatively, the fine powders may be obtained from PTFE latexes in the form of gels by coagulation with the electrolytes mentioned above. The gels may be obtained according to patents US 6 790 932 and US 6 780 966. The PTFE latexes are generally obtained by dispersion or emulsion polymerization.

The fine powders generally have a particle size of between 100 and 1600 microns, preferably from 200 to 800 microns and more preferably 400-700 microns.

As stated, mesh size of the metal belt substantially prevents passage of the fine polymer powder, that is to say that the amount of powder passing through the belt is typically less than 5% by wt, preferably less than 1%, more preferably less than 0.1%, still more preferably equal to 0.

The metal belt used in the present invention is preferably heat- and size-stable under the drying conditions. The expression 'size-stable' means that the linear variation of dimension (linear expansion) of metal material which the belt consists of is of less than 10%, preferably less than 5%, more preferably less than 1%, still more preferably less than 0.5%, in drying temperature domain, preferably in the domain between 10 and 300°C.

The belt is constituted of metallic materials, in particular those of high chemical, mechanical and heat resistance. Metals that may be mentioned include steel, for example stainless steel and carbon steel, and metal alloys. Preferably, the metallic materials are chosen from Hastelloy C 276, Hastelloy B 2, Alloy 20, AISI 304, AISI 316, AISI 405, AISI 309, AISI 302, AISI 317, AISI 316L, Inconel 600, Inconel 625, Incoloy 800, Incoloy 825, Monel 400, Monel K 500.

The metal belt may be under the form of a woven metal net or of a nonwoven metal net. As woven metal net we hereby designate metal fabrics. Said fabrics exhibit an interlacing of threads defining openings which may differ in

shape. Threads are arranged in warp and weft. Threads providing the warp are generally more rigid, while threads providing the weft are generally more flexible. The metal fabric may be obtained, for example, by interlacing of threads using techniques used for textile fabrics.

Instead of the metal fabric, it is possible to use a nonwoven metal net. In this case, the net may be obtained via techniques different from those used for textile fabrics, for example by pressing.

Preferably, use is made of a metal fabric.

The openings sizes of the metal belt are chosen as a function of the particle size of the fine powder obtained from the coagulation. The mesh are, for example, 100 microns for fine powders with minimum sizes of greater than 100 microns. The aperture sizes of the net or metal fabric are preferably between 10 and 250 microns, more preferably between 20 and 200 microns and even more preferably between 30 and 180 microns.

In step I), the bed is exposed to a flow of air through the entire thickness of the bed so as to dry the fine powder coagulate. The flow of air is generally between 0.1 $m^3/m^2 \cdot s$ and 2 $m^3/m^2 \cdot s$, preferably between 0.3 and 1 $m^3/m^2 \cdot s$ and more preferably between 0.4 and 0.8 $m^2/m^2 \cdot s$.

The drying air has a temperature of between 10°C and 300°C and preferably between 30°C and 250°C. Preferably, the drying air is heated. The temperature of the heated air is preferably between 90°C and 220°C and more preferably between 130°C and 200°C.

The bed of fine wet powder on the metal surface generally has a thickness that is not critical. Preferably, the bed is thin. In general, its thickness is between 0.1 and 10 cm, preferably between 0.2 and 7 cm and more preferably between 0.5 cm and 4 cm.

The drying process may be performed continuously or in batch mode, preferably continuously. In the latter process, the wet polymer powder is fed continuously and the dried powder is also removed continuously. In this case, the metal belt may also be in the form of a conveyor belt. In the batch process, the wet powder is loaded onto the fabric, the feed is stopped, the drying cycle is then performed for the predefined period and the dried powder is subsequently removed.

The dried fine powder of PTFE homopolymer or of TFE copolymers, melt-processable or non-melt-processable, obtainable via the process of the present invention generally has a water content of less than 0.04% by weight and more preferably less than 0.03% by weight.

The fine wet powders to be dried generally contain residues of polymerization initiators, surfactants and possibly polymerization additives. It is possible to remove most of the additives and the initiator before performing the drying process of the present invention. The removal may be performed, for example, by washing the coagulate or washing the gel via the techniques described, for example, in US 6 790 932.

It is also possible to remove the initiator by adding to the polymer latex an aqueous solution of a reducing agent. In this respect, reducing agents that may be mentioned include sulfites, preferably sodium sulfite and ammonium sulfite.

In step II), the cooling may be performed according to known techniques, for example by allowing the powder to cool naturally in air without the intervention of any cooling means. Another cooling method involves the use of cooling means, preferably dry air. In the latter case, the dry air fed in preferably has a temperature of between 0°C and 18°C and preferably 5-15°C. When dry air is fed in, it is advantageous to use the same flow rate of the heating air. During the cooling, the dried powder preferably reaches a temperature of less than 19°C. Below this temperature, in point of fact, in case of PTFE, is where the phase transition of the PTFE takes place, from the hexagonal crystal structure (T>19°C) to the perfect triclinic crystal structure (T<19°C). This makes it possible to maintain the properties of the product in the subsequent transfers.

In step III), the removal of the fine powder may be performed via known techniques, for example by gravity by turning the metal belt upside down.

The Applicant has surprisingly and unexpectedly found that, in the process of the invention, the PTFE homopolymer or the TFE copolymers, melt-processable or non-melt-processable, in the form of fine powder obtained from the coagulate do not substantially adhere to the metal belts. Specifically, after the step of removal of the polymer powder, the metal belts contain a lower amount of residual dried powder of PTFE homopolymer or TFE copolymer, melt-processable or non-melt-processable, when compared with the known processes of the prior art that use polymer fabrics. See the comparative examples. The adhesion to metals is about one order of magnitude lower. Thus, the process of the present invention shows low losses of powders as by-product. This fact is industrially important, given the high cost of fine powders of PTFE homopolymer or TFE copolymers, melt-processable or non-melt-processable. The process of the present invention is thus of high productivity by virtue of the reduced loss of dried powders.

In addition, the metal belts used in the process of the present invention may also be used at high temperatures, for example at temperatures of 250-280°C. In general, the metal belts may be used at higher temperatures compared with those that may be used with polymer fabrics (110°C-200°C). In the latter case, the use of higher temperatures may change the form and dimensions of the fabric. Thus, the use of the metal belts of the invention represents an appreciable advantage over the known prior art since it can be performed at higher temperatures, in particular higher than 200°C. This makes it possible to obtain fine powders with a high extrusion pressure. Thus, the process of the present invention

makes it possible to work within a wide temperature range. In addition, drying at high temperature subsequently increases the productivity of the process.

A further advantage of the metal belts is their lower cost compared with polymer belts. In addition, metal belts represent an appreciable simplification since they are easier to repair. This is an advantage when compared with polymer belts since they are easier to weld.

The powders of the invention have optimum properties since they do not need to be handled or manipulated by the operative. When continuous processing is performed, the powders obtained maintain substantially the same properties. Generally, the process of the invention, when it is continuous, is performed in a closed environment, as a result of which the powders are of high purity.

Further advantages of the drying process of the present invention are:

- when it is performed continuously there is preferably absence of handling of the dried powders by the operative and thus the production of a product with fewer defects and thus greater uniformity of properties. In point of fact, in the case of trays (or weaves), crushing of the powder generally takes place and this leads to a fine powder of lower value since it bears defects;
- greater qualitative consistency due to the improved uniformity of the powder;
- less contamination since the process is preferably performed in an environment isolated from the exterior (clean room);
- possibility of controlling the apparent density.

A further advantage of the process of the present invention is the possibility of working continuously, obtaining high productivity.

The combination of advantages described afforded by the process of the invention cannot be obtained by the processes of the prior art, either by those using metal trays or by those using polymer fabrics.

As stated, a preferred mode for obtaining the fine wet powders of PTFE homopolymer or of TFE copolymers, melt-processable or non-melt-processable, is dispersion (emulsion) polymerization. These processes use a sufficiently large amount of surfactant, so as to be able to stabilize the colloidal polymer particles, and gentle stirring is used so as to avoid coagulation of the polymer. Stabilizers, initiators and other additives (for example nucleating agents such as $ZnCl_2$) are also used.

A number of non-limiting examples illustrating the present invention will now be given.

Examples

Preparation of PTFE powder

Example 1

Preparation of the PTFE latex

600 parts by weight of degassed water, 0.4 part of ammonium perfluorooctanoate in the form of an aqueous solution and 0.006 part of ammonium persulfate in the form of an aqueous solution are placed in a reactor, placed under vacuum beforehand, equipped with a mechanical stirrer. The reactor is pressurized with tetrafluoroethylene (TFE) up to a pressure of 20 bar (2 MPa) and a temperature of 30°C.

0.009 part of a solution of $(NH_4)_2$ $Fe(SO_4)_2 \times 6H_2O$ (Mohr's salt) is then fed in.

When the pressure in the reactor has fallen to 0.5 bar ($5x10^4$ Pa), the feeding of TFE is commenced so as to maintain a constant pressure of 20 bar inside the reactor. At the same time, the internal temperature of the reactor is raised to 85°C at a rate of 1°C/minute. During the reaction in the reactor, 1.05 parts of a solution of ammonium perfluorooctanoate (surfactant) are fed in.

50 minutes after the start, the feeding of TFE is stopped and the reactor is vented, cooled and then emptied. The discharged latex has a concentration of 510 g of PTFE/litre of water.

Example 2

Coagulation of the PTFE latex

5.9 litres of latex prepared as in Example 1 and water to obtain 15 litres of latex at a concentration of 15 w/w % are introduced into a 50-litre coagulator and at a temperature of 24°C.

The mixture is stirred mechanically (inclined paddle stirrer) and aqueous 20% $HNO_3$ solution is added so as

to bring the pH of the latex to pH 1. The latex is stirred to obtain flotation of the powder, by applying to the stirrer a specific power of 3 $kW/m^3$ . At the end, the stirring is stopped and the water beneath the powder is separated from the fine wet powder.

The wet powder is washed for a time of 5 minutes, with stirring by applying a specific power of 3 $kW/m^3$ , with 30 litres of an aqueous solution at a temperature of 24°C, acidified with 20% $HNO_3$ so as to bring the pH of the aqueous phase to pH 1.

At the end, 30 litres of washing water are removed. The washing procedure is repeated twice more.

<u>Drying of the fine coagulated PTFE powders</u>

Example 3

A portion of metal fabric made of Alloy 20 10×23.7 cm in size, with a wire diameter equal to 0.2-0.4 mm and a mesh (aperture) size of 0.080 mm, is weighed (70.860 g) and a layer about 1.5 cm thick of fine wet PTFE powder of Example 2 is then deposited by gravity from a height of 25 cm.

This net is placed in an oven of through-air drier type in which the speed of the air directed from the top downwards is about 0.35 $m^3 \cdot m^{-2} \cdot s^{-1}$. The air temperature is 140°C, which is reached at a rate of 3.8°C.min , and maintained for 60 minutes to obtain a residual humidity of less than 0.04%. The heating is then stopped and dry air is fed in, at the same flow rate, so as to cool the powder. The time taken for this cooling is about 30 minutes.

Next, the piece of net is taken up and reweighed (71.772 g) and the PTFE powder is removed by gravity by turning the net upside down. The apparent density of this powder is 530 g/l. The net is then reweighed to determine the amount of polymer remaining thereon. The amount of polymer remaining on the metal is equal to $3.8 \cdot 10^{-3}$ $g/cm^2$.

Example 4 (comparative)

Example 3 was repeated, but using a portion of nonwoven Nomex® polymer fabric having the same dimensions as the metal net of Example 3.

This portion is weighed (2.720 g) and then covered with a layer of about 1.5 cm of PTFE powder obtained in Example 2, working according to the same procedure as in Example 3. This portion is placed in an oven operating under the same conditions as in Example 3, at 140°C, and maintained for 60 minutes. The nonwoven fabric is then allowed to cool while flushing with dry air.

Next, the piece of fabric is taken up and the PTFE powder is removed by gravity, by turning the fabric upside down. The net is then reweighed (5.483 g) to determine the amount of polymer remaining thereon. The amount of polymer that remains on the fabric is equal to $1.2 \cdot 10^{-2}$ $g/cm^2$.

Example 5

Example 3 was repeated, but using a portion of metal net made of AISI 316 10 × 23.7 cm in size, with a wire diameter equal to 0.090 mm and a mesh size of 0.125 mm. This portion was weighed (11.570 g) and then covered with a layer about 1.5 cm thick of fine wet PTFE powder of Example 2, working according to the same procedure described in Example 3.

The net is then placed in an oven operating under the same conditions as in Example 3 at 140°C for 60 minutes. At the end of the cooling, performed as in Example 3, the piece of fabric is taken up and the PTFE is removed by gravity, by turning the net upside down.

The net is then reweighed (11.856 g) to determine the amount of polymer remaining thereon. The amount of polymer that remains on the net is equal to $1.2.10^{-3}$ $g/cm^2$.

Example 6

Example 3 was repeated, using the same net made of Alloy 20, and the same procedures, but performing the drying in an oven at 180°C and for 30 minutes, to obtain a residual humidity of less than 0.04%.

The weight of the net before depositing the PTFE is 70.860 g.

After cooling, performed as in Example 3, the piece is taken up and the PTFE is removed by gravity, by turning the net upside down.

The net is then reweighed (71.80 g) to determine the amount of polymer remaining thereon. The amount of polymer that remains on the net is equal to $3.9.10^{-3}$ $g/cm^2$.

Example 7 (comparative)

Example 6 was repeated, but using the nonwoven Nomex® polymer fabric of Example 4 with the same dimensions of the metal net as in Example 3.
The weight of the portion of fabric before depositing the PTFE is 2.720 g. The weight of the fabric after removal of the dried PTFE is 6.300 g. The amount of polymer remaining on the fabric is equal to $1.5 \cdot 10^{-2}$g/cm$^2$.

Example 8

Example 3 was repeated, but using a net made of Alloy20 of different dimensions, the same procedure, but performing the drying in an oven at 220°C and for about 20 minutes, to obtain a residual humidity of less than 0.04%.
The dimensions of the net are 18.2 × 10 cm and the dimensions of the wires and the mesh size are those of Example 3. The weight of the net before depositing the PTFE is 54.455 g.
After cooling, performed as in Example 3, the piece is taken up and the PTFE is removed by gravity, by turning the net upside down. The net is then reweighed (54.900 g) to determine the amount of polymer remaining thereon. The amount of polymer that remains on the net is equal to $2.4.10^{-3}$ g/cm$^2$.

Example 9

Example 6 was repeated, the drying being performed in an oven at 180°C and for about 30 minutes, to obtain a residual humidity of less than 0.04%, but using the same net made of AISI 316 with dimensions equal to those of Example 5. The weight of the net before depositing the PTFE is 11.570 g.
After cooling, performed as in Example 3, the piece is taken up and the PTFE is removed by gravity, by turning the net upside down. The net is then reweighed (11.9 g) to determine the amount of polymer remaining thereon. The amount of polymer that remains on the net is equal to $1.4 \cdot 10^{-3}$ g/cm$^2$.

Example 10

Example 8 was repeated, the drying being performed in an oven at 220°C and for about 20 minutes, to obtain a residual humidity of less than 0.04%, but using a net made of AISI 316 with dimensions of 16.6 × 10 cm and wire dimensions and a mesh size equal to those of Example 5.
The weight of the net before depositing the PTFE is 8.144 g. After cooling, performed as in Example 3, the piece is taken up and the PTFE is removed by gravity, by turning the net upside down.
The net is then reweighed (8.355 g) to determine the amount of polymer remaining thereon. The amount of polymer that remains on the net is equal to $1.3 \cdot 10^{-3}$ g/cm$^2$.

Example 11

Example 8 was repeated, the drying being performed in an oven at 250°C and for about 10 minutes, to obtain a residual humidity of less than 0.04%. The weight of the net before depositing the PTFE is 54.455 g.
After cooling, performed as in Example 3, the piece is taken up and the PTFE is removed by gravity, by turning the net upside down. The net is then reweighed (54.905 g) to determine the amount of polymer remaining thereon. The amount of polymer that remains on the net is equal to $2.5 \cdot 10^{-3}$ g/cm$^2$.

Example 12 (comparative)

Example 4 was repeated, but using a portion of polymer fabric made of PEEK (polyether ether ketone) 15 × 15 cm in size and with a mesh size equal to 80 microns (0.08 mm) and having a wire diameter in the range 0.2-0.4 mm.
This portion is weighed (13.1 g) and then covered with a layer of about 1.5 cm of PTFE powder obtained in Example 2, working according to the same procedure as in Example 4.
This portion is placed in an oven operating under the same conditions as in Example 4, at 140°C, and maintained for 60 minutes. Next, the polymer fabric is cooled, as described in Example 3.
Next, the piece of fabric is taken up and the PTFE powder is removed by gravity, by turning the fabric upside down. The net is then reweighed (17.6 g) to determine the amount of polymer remaining thereon. The amount of polymer that remains on the fabric is equal to $2 \cdot 10^{-2}$ g/cm$^2$.
When compared with the data of Examples 3 and 12 (comparative), different losses of PTFE are noted. In particular, in Example 3, a weight loss equal to 0.2% (dry product) is obtained, whereas in Example 12 (comparative), the weight loss is equal to 0.6%. Thus, the use of metal nets or fabrics entails less loss and thus greater productivity

compared with polymer materials such as PEEK. In addition, the amounts of residual polymer to be discharged by washing the belt are also reduced, and the amounts of possible residual surfactants, such as PFOA, in the discharged powders are also reduced.

Example 13 (comparative)

A layer about 1.5 cm thick of fine wet PTFE powder of Example 2 is deposited on an AISI 316L tray 40 cm × 70 cm in size.

This tray is placed in a static oven. The air temperature is 140°C and is maintained for 32 hours to obtain a residual humidity of less than 0.04%. The tray is then allowed to cool. The cooling time is about 4 hours.

The apparent density is then measured, and is about 15% lower than that of Example 3.

Next, the PTFE powder is removed by gravity, by turning the tray upside down, to recover 30 g of product. The amount of polymer remaining on the tray is equal to $1.1 \cdot 10^{-2}$ g/cm$^2$.

Comparison of the data of Example 13 with those of Example 3 shows that the process of the present invention makes it possible to obtain shorter drying and cooling times. This entails improved productivity. In addition, the process of the present invention makes it possible to have an increased apparent density, which entails advantages in the subsequent powder processing steps.

Example 14

According to the procedure described in Example 3, tests were performed to measure the residual humidity as a function of time, using an air flow rate equal to 0.5 $m^3 \cdot m^{-2} \cdot s^{-1}$. The following data are obtained:

| t (min) | Humidity (weight %) |
|---|---|
| 15 | 0.26 |
| 30 | 0.06 |
| 45 | 0.02 |

From the results obtained from the examples, it is seen that a belt made of Alloy 20 metal fabric of Example 3 makes it possible to reduce the amount of polymer that remains on the belt compared with PEEK. In addition, it is observed that the amount of polymer that remains on the metal belt is smaller when compared with the polymer belts of the known art.

Examples 6 and 8-11 show that the metal belts may be used at higher temperatures than those of polymer belts without any changes in shape and dimensions of the metal belt being seen. Examples 6 and 8-11 also show that the higher the drying temperature, the shorter the time used for the process.

Thus, when compared with polymer belts, metal belts are of higher productivity since it is also possible to work at higher temperatures with shorter times, if desired.

## Claims

1. Process for preparing, in dried form, fine coagulated powders of PTFE homopolymer or of melt-processable or non-melt-processable TFE copolymers, comprising:

    I) application of fine wet coagulated powders of the polymer in the form of a bed onto the surface of a metal belt, drying of the fine wet powders by means of passing a stream of air through the bed in the direction from the top of the bed to the bottom of the bed;
    the belt having a mesh size that allows passage of the air and that substantially prevents passage of the fine polymer powder;
    II) cooling of the dried fine powder;
    III) removal of the powder from the surface of the metal belt.

2. Process according to Claim 1, wherein the fine coagulated powders may be obtained by coagulation of the polymer latexes.

3. Process according to Claims 1-2, wherein the fine powders have a particle size of between 100 and 1600 microns, preferably from 200 to 800 microns and more preferably 400-700 microns.

4. Process according to Claims 1 to 3, wherein the metal of the belt is chosen from steel, preferably stainless steel and carbon steel, and metal alloys.

5. Process according to Claims 1-4, wherein the belt is under the form of metal fabric or of nonwoven metal net, preferably of metal fabric.

6. Process according to Claims 1 to 5, wherein the mesh size of the metal belt is between 10 and 250 microns, preferably between 20 and 200 microns and more preferably between 30 and 180 microns.

7. Process according to Claims 1 to 6, wherein the air flow is between 0.1 $m^3/m^2 \cdot s$ and 2 $m^3/m^2 \cdot s$, preferably between 0.3 $m^3/m^2 \cdot s$ and 1 $m^3/m^2 \cdot s$ and more preferably between 0.4 $m^3/m^2 \cdot s$ and 0.8 $m^3/m^2 \cdot s$.

8. Process according to Claims 1 to 7, wherein the temperature of the drying air is between 10 and 300°C, preferably between 30°C and 250°C, more preferably between 90°C and 220°C and even more preferably between 130°C and 200°C.

9. Process according to Claims 1 to 8, wherein the thickness of the bed of fine wet coagulated polymer powder is between 0.1 and 10 cm, preferably between 0.2 cm and 7 cm and more preferably between 0.5 cm and 4 cm.

10. Process according to Claims 1 to 9, performed continuously or in batch mode.

11. Process according to Claims 1 to 10, wherein the belt is in the form of a conveyor belt.

12. Process according to Claims 1 to 11, wherein, in step II), the cooling is performed with dry air with a temperature of between 0°C and 18°C and preferably between 5°C and 15°C.

13. Process according to Claims 1 to 12, wherein, in step III), the removal of the dried powder is performed by gravity.

**Patentansprüche**

1. Verfahren für die Herstellung von koagulierten Feinpulvern in getrockneter Form aus PTFE-Homopolymer oder aus schmelzverarbeitbaren oder nicht-schmelzverarbeitbaren TFE-Copolymeren, umfassend:

   I) Auftragen von nassen koagulierten Feinpulvern aus dem Polymer in der Form eines Betts auf die Oberfläche eines Metallbandes;
   Trocknen der nassen Feinpulver durch Leiten eines Luftstroms durch das Bett in einer Richtung vom oberen Teil des Betts zum Boden des Betts; wobei das Band eine Maschengröße besitzt, die Luft passieren lässt und die im Wesentlichen das Passieren des Polymerfeinpulvers verhindert;
   II) Kühlen des getrockneten Feinpulvers;
   III) Entfernung des Pulvers von der Oberfläche des Metallbandes.

2. Verfahren gemäß Anspruch 1, wobei die koagulierten Feinpulver durch Koagulation der Polymerlatexe erhalten werden können.

3. Verfahren gemäß den Ansprüchen 1 - 2, wobei die Feinpulver eine Teilchengröße zwischen 100 und 1600 Mikrometer, vorzugsweise von 200 bis 800 Mikrometer und stärker bevorzugt von 400 - 700 Mikrometer, haben.

4. Verfahren gemäß den Ansprüchen 1 bis 3, wobei das Metall des Bandes aus Stahl, vorzugsweise rostfreiem Stahl und Kohlenstoffstahl und Metalllegierungen gewählt wird.

5. Verfahren gemäß den Ansprüchen 1 bis 4, wobei das Band die Form eines Metallgewebes oder eines nicht gewebten Metallnetzes, vorzugsweise eines Metallgewebes, besitzt.

6. Verfahren gemäß den Ansprüchen 1 bis 5, wobei die Maschengröße des Metallbandes zwischen 10 und 250

Mikrometer, vorzugsweise zwischen 20 und 200 Mikrometer, und stärker bevorzugt zwischen 30 und 180 Mikrometer, beträgt.

**7.** Verfahren gemäß den Ansprüchen 1 bis 6, wobei der Luftstrom zwischen 0,1 $m^3/m^2 \cdot s$ und 2 $m^3/m^2 \cdot s$, vorzugsweise zwischen 0,3 $m^3/m^2 \cdot s$ und 1 $m^3/m^2 \cdot s$, und stärker bevorzugt zwischen 0,4 $m^3/m^2 \cdot s$ und 0,8 $m^3/m^2 \cdot s$, beträgt.

**8.** Verfahren gemäß den Ansprüchen 1 bis 7, wobei die Temperatur der Trocknungsluft zwischen 10 und 300°C, vorzugsweise zwischen 30°C und 250°C, stärker bevorzugt zwischen 90°C und 220°C, und noch stärker bevorzugt zwischen 130°C und 200°C liegt.

**9.** Verfahren gemäß den Ansprüchen 1 bis 8, wobei die Dicke des Betts von nassem koaguliertem Polymerfeinpulver zwischen 0,1 und 10 cm, vorzugsweise zwischen 0,2 cm und 7 cm, und stärker bevorzugt zwischen 0,5 cm und 4 cm liegt.

**10.** Verfahren gemäß den Ansprüchen 1 bis 9, das kontinuierlich oder satzweise durchgeführt wird.

**11.** Verfahren gemäß den Ansprüchen 1 bis 10, wobei das Band die Form eines Förderbands hat.

**12.** Verfahren gemäß den Ansprüchen 1 bis 11, wobei in Schritt II) das Kühlen mit Trockenluft bei einer Temperatur zwischen 0°C und 18°C und vorzugsweise zwischen 5°C und 15°C erfolgt.

**13.** Verfahren gemäß den Ansprüchen 1 bis 12, wobei in Schritt III) die Entfernung des getrockneten Pulvers durch Schwerkraft erfolgt.

## Revendications

**1.** Procédé pour préparer, sous forme séchée, de fines poudres coagulées d'homopolymère de PTFE ou de copolymères de TFE transformables à l'état fondu ou non transformables à l'état fondu, comprenant :

I) l'application de fines poudres coagulées humides du polymère sous la forme d'un lit sur la surface d'une bande métallique,
le séchage des fines poudres humides au moyen du passage d'un courant d'air à travers le lit dans la direction allant du haut du lit jusqu'en bas du lit ;
la bande ayant une ouverture de maille qui permet le passage de l'air et qui empêche sensiblement le passage de la fine poudre de polymère ;
II) le refroidissement de la fine poudre séchée ;
III) le retrait de la poudre de la surface de la bande métallique.

**2.** Procédé selon la revendication 1, dans lequel les fines poudres coagulées peuvent être obtenues par coagulation des latex de polymère.

**3.** Procédé selon les revendications 1 et 2, dans lequel les fines poudres ont une taille de particules comprise entre 100 et 1600 $\mu$m, de préférence 200 et 800 $\mu$m, et mieux encore 400 et 700 $\mu$m.

**4.** Procédé selon les revendications 1 à 3, dans lequel le métal de la bande est choisi parmi les aciers, de préférence l'acier inoxydable et l'acier au carbone, et les alliages métalliques.

**5.** Procédé selon les revendications 1 à 4, dans lequel la bande se présente sous la forme d'un tissu métallique ou d'un filet métallique non tissé, de préférence d'un tissu métallique.

**6.** Procédé selon les revendications 1 à 5, dans lequel l'ouverture de maille de la bande métallique se situe entre 10 et 250 $\mu$m, de préférence entre 20 et 200 $\mu$m, et mieux encore entre 30 et 180 $\mu$m.

**7.** Procédé selon les revendications 1 à 6, dans lequel le débit d'air se situe entre 0,1 $m^3/m^2 \cdot s$ et 2 $m^3/m^2 \cdot s$, de préférence entre 0, $m^3/m^2 \cdot s$ et 1 $m^3/m^2 \cdot s$, et mieux encore entre 0,4 $m^3/m^2 \cdot s$ et 0,8 $m^3/m^2 \cdot s$.

**8.** Procédé selon les revendications 1 à 7, dans lequel la température de l'air de séchage se situe entre 10 et 300 °C,

de préférence entre 30 et 250 °C, mieux entre 90 et 220 °C, et mieux encore entre 130 et 200 °C.

**9.** Procédé selon les revendications 1 à 8, dans lequel l'épaisseur du lit de fine poudre coagulée humide de polymère se situe entre 0,1 et 10 cm, de préférence entre 0,2 et 7 cm, et mieux encore entre 0,5 et 4 cm.

**10.** Procédé selon les revendications 1 à 9, mis en oeuvre de façon continue ou en mode discontinu.

**11.** Procédé selon les revendications 1 à 10, dans lequel la bande se présente sous la forme d'une bande transporteuse.

**12.** Procédé selon les revendications 1 à 11 dans lequel, à l'étape II), le refroidissement est effectué avec de l'air sec à une température comprise entre 0 et 18 °C, de préférence entre 5 et 15 °C.

**13.** Procédé selon les revendications 1 à 12 dans lequel, à l'étape III), le retrait de la poudre séchée est accompli par gravité.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 5391709 A
- US 6790932 B
- US 6780966 B